# EUROPEAN PATENT APPLICATION

(11) **EP 3 581 840 A1**
(43) Date of publication of application: **18.12.2019**
(21) Application number: 19178953.6
(22) Date of filing: 07.06.2019
(51) Int. Cl.: F16L 53/38, F16L 59/02, H05B 3/46

(54) **SYSTEM FOR HEATING KEROSENE**

(30) Priority: 12.06.2018 TW 107207828 U
(71) Applicant: Chang, Ming-Hua, Dacun Township, Changhua County 515 (TW)
(72) Inventor: Chang, Ming-Hua, Dacun Township, Changhua County 515 (TW)
(74) Representative: Hellmich, Wolfgang

(57) **Abstract**

A heating system includes a pipe (10) for flowing kerosene, the pipe (10) including lengthwise conductive ridges (11) on an inner surface; a pump (20) being in fluid communication with kerosene; heating assemblies (30) each including an insulation cylinder (31) put on a portion of the pipe (10), and a heating coil (32) wound on the insulation cylinder (31) for heating the kerosene; and a plurality of electric power sources (40) each electrically connected to the heating coil (32).

## Description

### BACKGROUND OF THE INVENTION

### 1. Field of the Invention

The invention relates to kerosene heating and more particularly to a system for heating kerosene having improved characteristics.

### 2. Description of Related Art

Conventional systems for heating kerosene are disadvantageous due to danger, low thermal efficiency, and complicated components.

Thus, the need for improvement still exists.

### SUMMARY OF THE INVENTION

It is therefore one object of the invention to provide a heating system, comprising a closed pipe for flowing kerosene, the closed pipe including a plurality of lengthwise conductive ridges on an inner surface; a pump in fluid communication with kerosene in the closed pipe; a plurality of heating assemblies each including an insulation cylinder put on a portion of the closed pipe, and a heating coil wound on the insulation cylinder for heating the kerosene in the closed pipe; and a plurality of electric power sources each electrically connected to the heating coil.

The above and other objects, features and advantages of the invention will become apparent from the following detailed description taken with the accompanying drawings.

### BRIEF DESCRIPTION OF THE DRAWINGS

FIG. 1 schematically depicts a system for heating kerosene according to a first preferred embodiment of the invention;
FIG. 2 is a cross-sectional view of the heating assembly and the pipe;
FIG. 3 is a longitudinal sectional view of the heating assembly and the pipe; and
FIG. 4 schematically depicts a system for heating kerosene according to a second preferred embodiment of the invention.

### DETAILED DESCRIPTION OF THE INVENTION

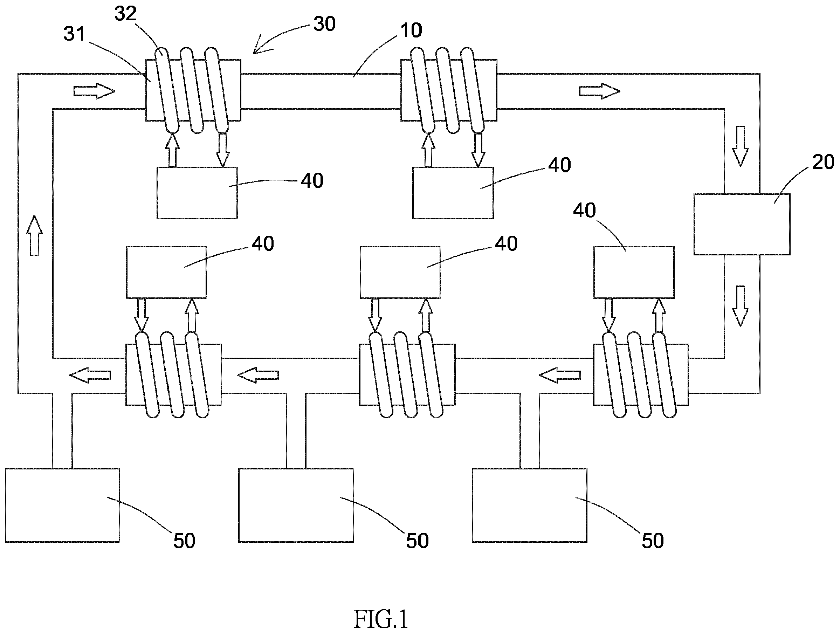

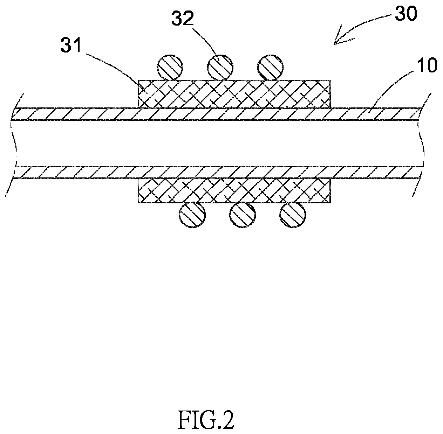

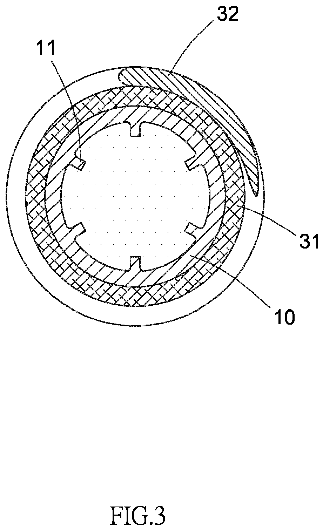

Referring to FIGS. 1 to 3 a system for heating kerosene in accordance with a first preferred embodiment of the invention comprises a closed pipe 10 for flowing kerosene, the closed pipe 10 including a plurality of lengthwise conductive ridges 11 on an inner surface; a pump 20 being in fluid communication with kerosene in the closed pipe 10; a plurality of heating assemblies 30 including an insulation cylinder 31 put on a portion of the closed pipe 10, and a heating coil 32 wound on the insulation cylinder 31 for heating the kerosene in the closed pipe 10; a plurality of electric power sources 40 each electrically connected to the heating coil 32; and a plurality of targets 50 being in fluid communication with kerosene in the closed pipe 10.

Preferably, the insulation cylinder 31 is formed of glass wool, cellulose, rock wool, polystyrene foam, urethane foam, vermiculite, or cork.

The provision of the insulation cylinder 31 can prevent the heating coil 32 from being damaged due to high heat.

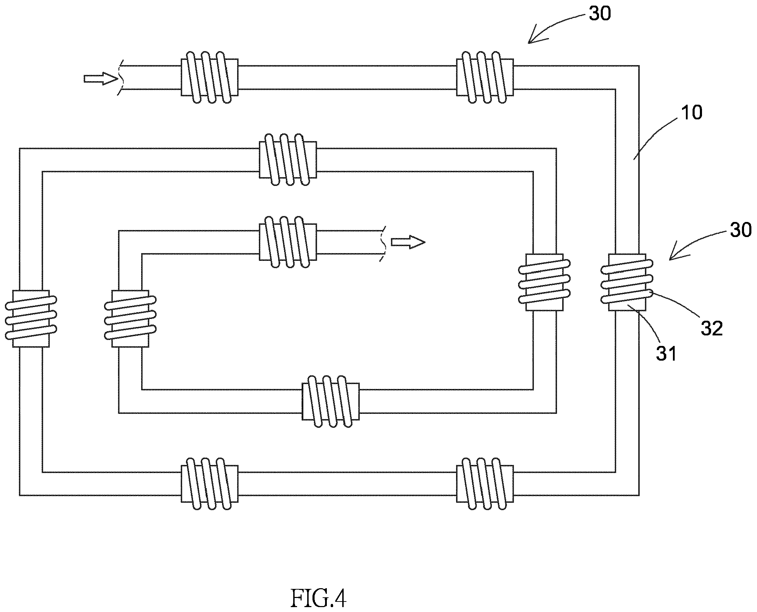

Referring to FIG. 4, a system for heating kerosene in accordance with a second preferred embodiment of the invention is shown. The characteristics of the second preferred embodiment are substantially the same as that of the first preferred embodiment except the following: the pipe 10 is open. The pump is eliminated. The electric power sources 40 are eliminated.

## Claims

1. A heating system, comprising:
a pipe (10) for flowing kerosene;
a fluid moving device (20) being in fluid communication with kerosene in the pipe (10);
a plurality of heating assemblies (30) each including an insulation cylinder (31) put on a portion of the pipe (10), and a heating coil (32) wound on the insulation cylinder (31) for heating the kerosene in the pipe (10); and
a plurality of electric power sources (40) each electrically connected to the heating coil (32).

2. The heating system of claim 1, wherein the fluid moving device (20) is a pump.

3. The heating system of claim 1 or 2, wherein the pipe (10) comprises a plurality of lengthwise conductive ridges (11) on an inner surface.

4. The heating system according to one of the preceding claims, wherein the insulation cylinder (31) is formed of glass wool, polystyrene foam, or urethane foam.

5. The heating system according to one of the preceding claims, wherein the pipe (10) is closed.

6. The heating system according to one of the preceding claims, wherein the pipe (10) is open.
